Europäisches Patentamt

European Patent Office

Office européen des brevets

(11) Veröffentlichungsnummer : **0 131 856**
**B1**

(12) # EUROPÄISCHE PATENTSCHRIFT

(45) Veröffentlichungstag der Patentschrift :
30.12.86

(51) Int. Cl.⁴ : **B 60 R 13/08**

(21) Anmeldenummer : **84107858.7**

(22) Anmeldetag : **05.07.84**

---

(54) Getriebe, insbesondere für Kraftfahrzeuge, mit verminderter Geräuschabstrahlung.

---

(30) Priorität : 15.07.83 DE 3325636

(43) Veröffentlichungstag der Anmeldung :
23.01.85 Patentblatt 85/04

(45) Bekanntmachung des Hinweises auf die Patenterteilung : 30.12.86 Patentblatt 86/52

(84) Benannte Vertragsstaaten :
AT DE FR GB IT NL SE

(56) Entgegenhaltungen :
AT-B- 345 051
AT-B- 354 863
DD-B- 2 004 385
US-A- 3 882 951

(73) Patentinhaber : M A N Nutzfahrzeuge GmbH
Dachauer Strasse 667 Postfach 50 06 20
D-8000 München 50 (DE)

(72) Erfinder : Stiglmaier, Manfred
Am Grübel 7a
D-8031 Olching (DE)
Erfinder : Drewitz, Hans
Agnesstrasse 59
D-8000 München 40 (DE)

EP 0 131 856 B1

## Beschreibung

Die Erfindung betrifft ein Getriebe gemäß dem Oberbegriff des Anspruchs 1, wie es durch die AT-B-354 863 bekannt ist.

Dieses bekannte Getriebe bildet zusammen mit einem Verbrennungsmotor eine Antriebseinheit, welche innerhalb einer geschlossenen, schall-dämmenden Kapsel innerhalb eines Kraftfahrzeu-ges angebracht ist. Hierbei sind notgedrungen alle dem Getriebe zugeordneten Elemente, z. B. die Wartungselemente, in die schallschluckende Umkleidung mit einbezogen, es müssen jedoch noch immer bewegliche Bedienungselemente und dgl. durch die Umkleidung hindurchgeführt werden, wobei die hierfür vorgesehene Aussparung in der Umkleidung in ihre Größe mit zunehmendem Abstand zwischen Umkleidung und eigentlichem Getriebe zunimmt. Abgesehen davon, daß das bekannte Getriebe trotz des für die Umkleidung aufgewandten Aufwandes keine voll befriedigenden Schalldämmung aufweist, besteht die Notwendigkeit einer zeitraubendem Demontage und erneuten Montage von Teilen der Verkleidung, wenn der Zugang zu den Wartungselementen erforderlich wird.

Daher ist es Aufgabe der Erfindung, ein Getriebe zu schaffen, bei welchem nicht nur die Geräuschabstrahlung auf ein Mindestmaß herabgesetzt ist, sondern außerdem noch — ohne zusätzliche Demontagearbeiten — die Zugängigkeit zu den mit der näheren Umgebung des eigentlichen Getriebes in Verbindung stehenden Getriebeelementen erhalten bleibt.

Die Aufgabe wird durch die Merkmale des Anspruchs 1 gelöst. Hierbei bildet die Kapsel, in welcher das Getriebe aufgenommen ist, seinerseits einen integrierten Getriebeteil ohne bewegliche Teile. Diese Anordnung liefert kleine Durchtrittsöffnungen für die mit der näheren Umgebung des eigentlichen Getriebes in Verbindung stehenden Getriebeelementen ; außerdem ist das Getriebe ohne weiteres zugänglich, da es nicht in einer abgeschlossenen Kapsel sitzt, wie dies bei der eingangs genannten, gattungsbildenden Druckschrift der Fall war.

Die Erfindung wird nunmehr unter Bezugnahme auf die beigefügten Zeichnungen näher erläutert.

Figur 1 ist eine Seitenansicht des erfindungsgemäßen Getriebes ;

Figur 2 ist eine Ansicht des in Fig. 1 dargestellten Getriebes von unten ;

Figuren 3 und 4 zeigen, in größerem Maßstab, den Aufbau von abgedichteten Durchtrittsöffnungen sowie der durch diese Öffnungen in die Umgebung hindurchtretenden Getriebeelemente.

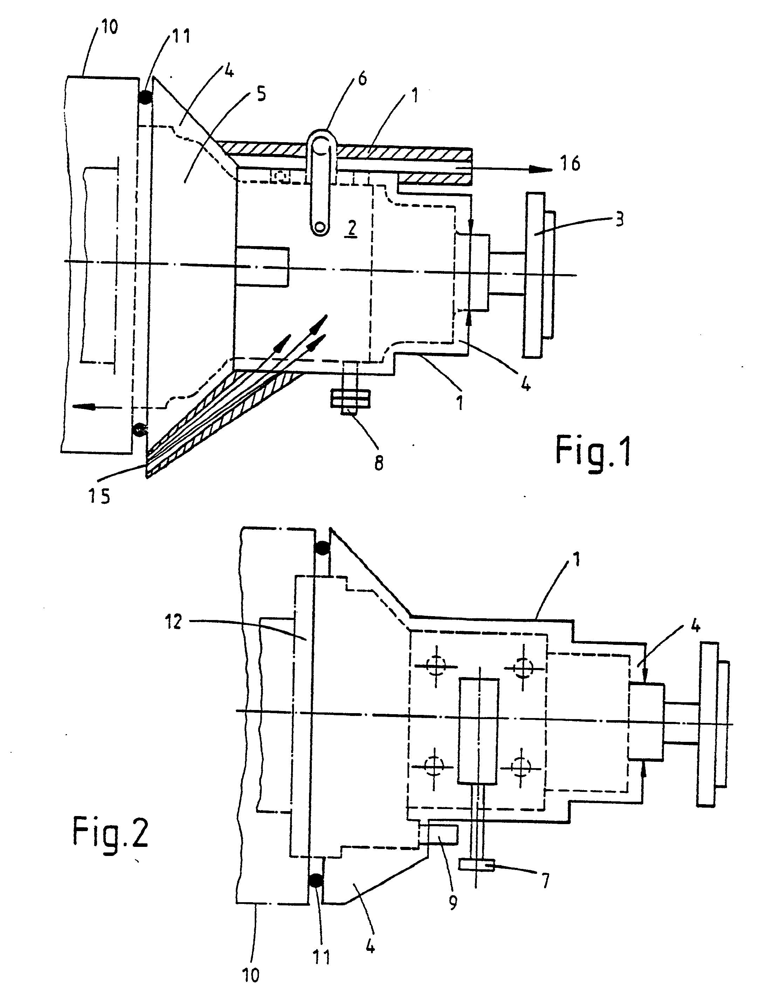

Fig. 1 zeigt das Getriebegehäuse 2, in welchem das eigentliche Getriebe untergebracht ist. In Fahrtrichtung (angedeutet durch den Pfeil links der Fig. 1) vor dem Getriebegehäuse befindet sich das Kupplungsgehäuse 5, während hinter dem Getriebegehäuse der Getriebeabtriebsflansch 3 zu erkennen ist. Das Getriebegehäuse ist nun von einer Kapsel 1 aus schallabsorbierendem Material, z. B. Kunststoff, Stahlblech bzw. schallschluckenden Verbundmaterilien umge-ben, wobei die Kapsel einen integrierten Getriebeteil bildet und Durchtrittsöffnungen für herausgeführte Elemente, z. B. den Flansch 3, den Fernschaltblock 6 und dessen Betätigungsnebel 7, den Ölablaß 8, usw. aufweist.

Es ist vorteilhaft, zwischen dem Getriebegehäuse 2 und der Kapsel 1 einen Zwischenraum 4 vorzusehen, indem man beispielsweise Schwingmetallager für Kapsellagerung vorsieht. Wenn auch eine Kühlung des Getriebes über das Getriebeöl mittels eines außerhalb der Kapsel 1 liegenden Öl/Luft-Wärmeaustauschers erfolgen kann, so bietet doch ein solcher Zwischenraum 4 eine weitere Kühlungsmöglichkeit durch Belüftung dieses Zwischenraumes. In Fig. 1 ist eine solche Kühlung dargestellt, wobei die Kühlluft vorne unten bei 15 eintritt, sich im Raum 4 verteilt, über das Getriebegehäuse 2 streicht und hinten oben bei 16 wieder austritt. Eine solche Belüftung des Zwischenraumes 4 kann beispielsweise erfolgen mittels Thermosyphonwirkung, mittels Thermosyphon und Staudruckwirkung oder durch Zwangsbelüftung mittels eines externen Lüfters. Damit Getriebegeräusche nicht durch die Luftzufuhr- und -abfuhrkanäle hindurch nach außen dringen, werden diese Kanäle vor-zugsweise mit Schallabsorptionsstrecken aus-gestattet.

Was den lichten Abstand zwischen Getriebegehäuse 2 und Kapsel 1 betrifft, so beträgt dieser zweckmäßigerweise, je nach Kühlung, Belüftung und zulässiger Getriebeübertragungsleistung, etwa 2 bis 100 mm.

Es ist ferner zweckmäßig, die Kapsel 1 mit Zwischenraum 4 auch über die Oberfläche des Kupplungsgehäuses 5 mit auszudehnen, wobei dann die Kapsel 1 zusätzlich eine Durchtrittsöffnung für den Hydraulik- oder Pneumatikzylinder 9 (Fig. 2) für die Kupplungsbetätigung aufweist.

Bei Anwendung der Kapsel 1 in Verbindung mit Fahrzeugmotoren mit oder ohne Motorkapsel 10 (Fig. 1 und 2), wird eine luftdichte Trennung 11 beider Kapseln vorgesehen, damit jede der Kapseln entsprechend den jeweiligen Anforderungen getrennt gekühlt bzw. belüftet werden kann. Bei einem Fahrzeugmotor ohne Motorkapsel ist ein luftdichter Anschluß der Kapsel 1 am Schwungradgehäuse 12 (Fig. 2) motorseitig oder am Kupplungsgehäuse 5 motorseitig vorgesehen.

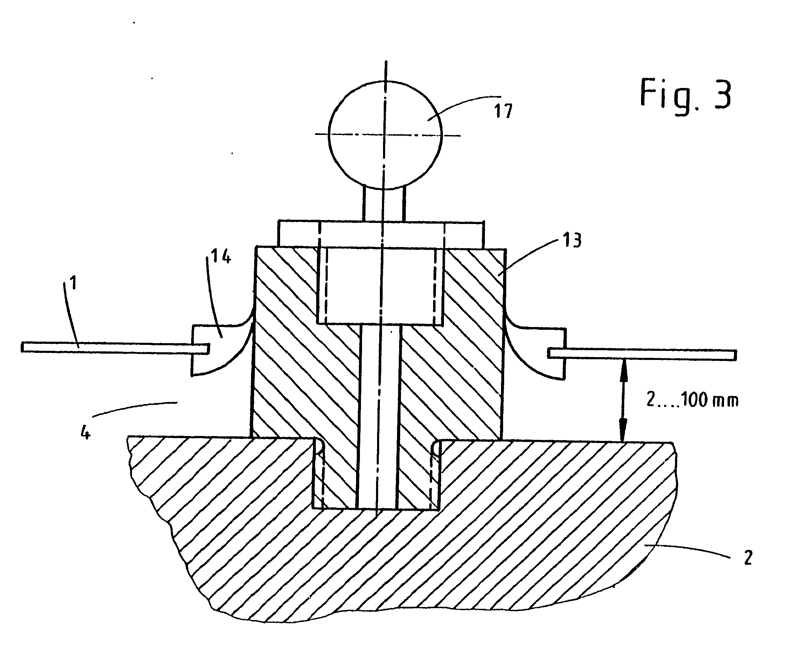

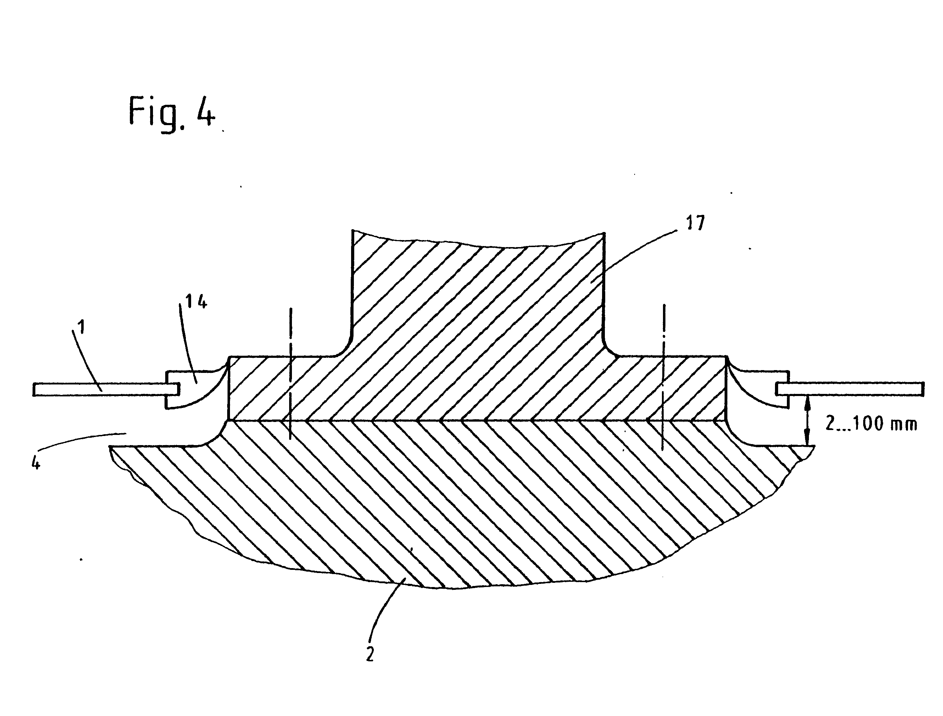

Was nun die Durchtrittsöffnungen in der Kapsel 1 für herausgeführte Elemente betrifft, so ist in diesen Öffnungen eine Abdichtung vorgesehen. Die Abdichtung erfolgt entweder direkt gegen das betreffende hindurchgeführte Getriebeelement 17 (Fig. 4) oder indirekt über einen zwischenge-schalteten Durchtrittsflansch bzw. ein Zwischen-stück 13 (Fig. 3). Zur Abdichtung dient ein Abdichtprofil 14 aus elastomerem Material, welches zur Erfüllung der ihm zugedachten Aufgabe zweckentsprechend geformt ist. Beispielsweise kann der Rand der Kapseldurchtrittsöffnung in eine Nut des Profils 14 eingreifen und eine Lippe dieses Profils kann am Element 17 bzw. am Zwischenstück 13 anliegen. Dabei ist die Dichtung so ausgelegt, daß sie den Schwingungen zwischen Getriebe und Kapsel 1 sowie den Temperaturbelastungen standhält.

Das erfindungsgemäße Getriebe bietet eine ganze Reihe von Vorteilen. Für Getriebeelemente, welche außerhalb bzw. teilweise außerhalb der Kapsel 1 liegen, ist keine separate Kühlung bzw. Belüftung erforderlich. Diese Elemente sind, wie bei einem Getriebe ohne jede Kapsel, zugänglich. Das eigentliche Getriebe kann infolge des Zwischenraumes 4 zwischen Getriebegehäuse 2 und Kapsel 1 gezielt, z. B. temperaturabhängig, gekühlt bzw. belüftet werden. Durch die Isolierwirkung der Kapsel 1 erreicht und hält man die Soll-Betriebstemperatur leichter aufrecht. Daraus ergibt sich im Anfahr- und Teillastbereich zusätzlich eine erhebliche Treibstoffeinsparung. Die Getriebekapsel 1 ist ein integraler, schalldämmender und isolierender Getriebeteil, welcher bei Wartungsarbeiten nicht, auch nicht etwa teilweise, entfernt zu werden braucht.

Positionsliste

1 Getriebekapsel
2 Getriebegehäuse
3 Getriebeabtriebsflansch
4 Zwischenraum (zwischen 1 und 2)
5 Kupplungsgehäuse
6 Fernschaltblock
7 Betätigungshebel am Block 6
8 Ölablaß
9 Zylinder für Kupplungsbetätigung
10. Motorkapsel
11 luftdichte Trennung zwischen 1 und 10
12 Schwungradgehäuse
13 Durchtrittsflansch bzw. Zwischenstück
14 Abdichtprofil, Dichtlippe
15 Kühlluft-Eintritt
16 Kühlluft-Austritt
17 nach außen geführtes Getriebeelement

**Patentansprüche**

1. Getriebe, insbesondere für Kraftfahrzeuge, mit verminderter Geräuschabstrahlung, wobei das Getriebegehäuse (2) von einer Kapsel (1) aus schalldämmendem und absorbierendem Material umgeben ist, und wobei die Kapsel (1) abgedichtete Durchtrittsöffnungen für die mit der näheren Umgebung des eigentlichen Getriebes in Verbindung stehenden Getriebeelementen aufweist, dadurch gekennzeichnet, daß die Kapsel (1) einen integrierten Getriebeteil ohne bewegliche Teile bildet.

2. Getriebe nach Anspruch 1, dadurch gekennzeichnet, daß die Kapsel (1) am Getriebegehäuse (2) körperschallisoliert gelagert ist und aus Kunststoff, Stahlblech bzw. schallschluckenden Verbundmaterialien besteht.

3. Getriebe nach Anspruch 1 und 2, dadurch gekennzeichnet, daß die mit der näheren Umgebung des eigentlichen Getriebes in Verbindung stehenden Getriebeelemente (17) entweder direkt oder über Durchtrittsflansche bzw. Zwischenstücke (13) nach außen geführt sind.

4. Getriebe nach einem der vohergehenden Ansprüche, dadurch gekennzeichnet, daß zwischen der Durchtrittsöffnung in der Kapsel (1) und dem hindurchgeführten Element (17) bzw. dem Zwischenstück (13) ein Abdichtprofil (14) aus elastomerem Material eingesetzt ist.

5. Getriebe nach einem der vorhergehenden Ansprüche, dadurch gekennzeichnet, daß sich zwischen Getriebegehäuse (2) und Kapsel (1) ein Zwischenraum (4) befindet.

6. Getriebe nach Anspruch 5, dadurch gekennzeichnet, daß der Zwischenraum (4) als Luftströmungskanal zur Getriebekühlung ausgebildet ist.

7. Getriebe nach Anspruch 6, dadurch gekennzeichnet, daß sowohl in die Luftzufuhr als auch in die Luftabfuhr zum Luftströmungskanal (4) Schallabsorptionsstrecken eingebaut sind.

**Claims**

1. A low-noise gearbox, more particularly for motor vehicles, the gearbox casing (2) having around it an enclosure (1) of a sound-damping and sound-absorbent material, the enclosure (1) being formed with sealed apertures through which the gearbox elements associated with the immediate vicinity of the gearbox can extend, characterised in that the enclosure (1) forms an integrated gearbox part without moving parts.

2. A gearbox according to claim 1, characterised in that the enclosure (1) is so mounted on the gearbox casing (2) as to be insulated against the conduction of sound by solids and is made of plastics, steel plate and/or sound-absorbing composite materials.

3. A gearbox according to claims 1 and 2, characterised in that the gearbox elements (17) associated with the immediate vicinity of the gearbox extend to the outside either directly or by way of flanges or intermediate members (13).

4. A gearbox according to any of the previous claims, characterised in that a sealing section member (14) made of an elastomer is inserted between the lead-through aperture in the enclosure (1) and the led-through element (17) or intermediate element (13).

5. A gearbox according to any of the previous claims, characterised in that there is a gap (4) between the gearbox casing (2) and the enclosure (1).

6. A gearbox according to claim 5, characterised in that the gap (4) is in the form of an airflow channel for cooling the gearbox.

7. A gearbox according to claim 6, characterised in that sound-absorbent sections are built into the air supply and into the air discharge associated with the airflow channel (4).

## Revendications

1. Boîte de vitesses à rayonnement sonore réduit, destinée en particulier aux véhicules automobiles, dans laquelle le carter (2) de la boîte de vitesse est entouré par une enveloppe (1) en matériau amortissant et absorbant le bruit, et dans laquelle l'enveloppe (1) présente des ouvertures de passage rendues étanches pour les éléments de la boîte de vitesses qui sont en liaison avec l'environnement immédiat de la boîte de vitesses proprement dite, caractérisée en ce que l'enveloppe (1) forme une partie intégrante de la boîte de vitesses sans parties mobiles.

2. Boîte de vitesses selon la revendication 1, caractérisée en ce que l'enveloppe (1) est montée avec isolation acoustique sur le carter (2) de la boîte de vitesses et est constituée en matière plastique, en tôle d'acier ou en matériaux composites absorbant le bruit.

3. Boîte de vitesses selon la revéndication 2, caractérisée en ce que les éléments (17) de la boîte de vitesses en liaison avec l'environnement immédiat de la boîte de vitesses proprement dite sont amenés à l'extérieur soit directement, soit à travers des brides de passage ou des pièces intermédiaires (13).

4. Boîte de vitesses selon l'une des revendications précédentes, caractérisée en ce qu'un profilé d'étanchéité (14) un matériau élastomère est intercalé entre l'ouverture de passage dans l'enveloppe (1) et l'élément amené (17) ou la pièce intermédiaire (13).

5. Boîte de vitesses selon l'une des revendications précédentes, caractérisée en ce qu'un espace intermédiaire (4) se trouve entre le carter (2) de la boîte de vitesses et l'enveloppe (1).

6. Boîte de vitesses selon la revendication 5 caractérisée en ce que l'espace intermédiaire (4) est agencé en tant que canalisation de flux d'air pour le refroidissement de la boîte de vitesses.

7. Boîte de vitesses selon la revendication 6, caractérisée en ce que des tronçons d'absorption de bruit sont montés aussi bien dans l'amenée d'air à la canalisation de flux d'air (4) que dans l'évacuation d'air à partir de cette canalisation.

Fig.1

Fig.2

Fig. 3

0 131 856

Fig. 4

2...100 mm

0 131 856